# EUROPEAN PATENT APPLICATION

(11) **EP 3 239 808 A1**
(43) Date of publication of application: **01.11.2017**
(21) Application number: 17163283.9
(22) Date of filing: 28.03.2017
(51) Int. Cl.: G06F 1/26, G06F 1/28, G06F 1/30, G06F 1/32, H02M 3/158

(54) **POWER DELIVERY SYSTEM FOR MULTICORE PROCESSOR CHIP**

(30) Priority: 25.04.2016 US 201662326904 P; 20.02.2017 US 201715436868
(71) Applicant: MediaTek Inc., Hsin-Chu 300 (TW)
(72) Inventor: CHOU, Chia-Hua, 300 Hsinchu City (TW); HSU, Yen-Hsun, 312 Hsinchu County (TW)
(74) Representative: Hoefer & Partner Patentanwälte mbB

(57) **Abstract**

A power delivery system (100) for a multi-core processor chip (200) includes: a plurality of first power delivery units (112_1-112_N) and a plurality of second power delivery units (114_1-114_N). The plurality of first power delivery units (112_1-112_N) are coupled to a first power supply device (120). Each of the first power delivery units (112_1-112_N) is arranged to supply power from the first power supply device (120) to a core (CR1-CRN) of the multi-core processor chip (200). The plurality of second power delivery units (114_1-114_N) are coupled to a second power supply device (140). Each of the second power delivery units (114_1-114_N) is arranged to selectively supply power from the second power supply (140) to the core (CR1-CRN) of the multi-core processor chip (200) according to a level of a core voltage (VDD1-VDDN) required by the core (CR1-CRN) of the multi-core processor chip (200).

## Description

### Background

Buck converters are advantageous for use in providing power to a multi-core processor because of their high power efficiency. However, in a conventional design, each core of the multi-core processor could be powered by a same buck regulator. Such design unfortunately degrades an overall power efficiency because not each core is operated in an identical load state at the same time. Desired levels of core voltages required by some cores may be higher, while desired levels of core voltages required by other cores may be lower. Supplying a same voltage to different cores through a same buck regulator leads to unnecessary waste of power, degrading the overall power efficiency.

On the other hand, when a core of the multi-core processor processes certain complicated task, current demand may significantly ramps up. This rapid change in current draw cause a "voltage droop" effect, which means the level of the core voltage of the core is pulled downward. If the level of the core voltage drops too low, the performance of the core will be disadvantageously affected.

### Summary

In order to improve the overall power efficiency of a conventional multi-processor power supply system, the present invention provides a power delivery system having multiple power delivery devices. Each of the power delivery devices is able to independently adjust a level of a core voltage provided to a core according to its voltage demand. Therefore, the waste of power can be reduced.

In order to alleviate the voltage droop effect of the core voltage and avoid the degradation of the core performance once the current demand of a core of the multi-core processor suddenly ramps up, the present invention provides a power supply system have having multiple power delivery devices. Each of the power delivery devices has a current booster for selectively supplying a boost current to a core. The current booster is able to monitor the level of a core voltage provided to the core. When the level drops too severely, the current booster provides the boost current to the corresponding core, thereby to pull up/maintain the level, alleviating the voltage droop effect.

As will be seen more clearly from the detailed description following below, a power delivery system for a multi-core processor chip is described. The power delivery system includes: a plurality of first power delivery units and a plurality of second power delivery units. The plurality of first power delivery units are coupled to a first power supply device. Each of the first power delivery units is arranged to supply power from the first power supply device to a core of the multi-core processor chip. The plurality of second power delivery units are coupled to a second power supply device. Each of the second power delivery units is arranged to selectively supply power from the second power supply to a core of the multi-core processor chip according to a level of a core voltage required by the core of the multi-core processor chip.

As will be seen more clearly from the detailed description following below, a multi-core processor chip is described. The multi-core processor chip comprises a plurality of cores and a power delivery system. The power delivery system comprises: a plurality of first power delivery units and a plurality of second power delivery units. The plurality of first power delivery units are coupled to a first power supply device. Each of the first power delivery units is arranged to supply power from the first power supply device to a core of the multi-core processor chip. The plurality of second power delivery units are coupled to a second power supply device. Each of the second power delivery units is arranged to selectively supply power from the second power supply to a core of the multi-core processor chip according to a level of a core voltage required by the core of the multi-core processor chip.

These and other objectives of the present invention will no doubt become obvious to those of ordinary skill in the art after reading the following detailed description of the preferred embodiment that is illustrated in the various figures and drawings.

### Brief Description of the Drawings

In the following, the disclosure is illustrated by way of example, taking reference to accompanying drawings thereof.
FIG. 1 illustrates a schematic diagram of a power delivery system and a multi-core processor chip according to one embodiment of the present invention.
FIG. 2 illustrates a schematic diagram of a power delivery system and a multi-core processor chip according to another embodiment of the present invention.
FIG. 3 illustrates a block diagram of a power delivery device according to one embodiment of the present invention.
FIGS.4-6 illustrate configurations of power delivery devices applied in different load states of multiple cores according to one embodiment of the present invention.
FIG. 7 illustrates a schematic diagram of a second power delivery unit according to one embodiment of the present invention.
FIG. 8 illustrates a waveform of a core voltage for exemplarily explaining how the second power delivery unit operations according to one embodiment of the present invention.

### Detailed Description

Certain terms are used throughout the following descriptions and claims to refer to particular system components. As one skilled in the art will appreciate, manufacturers may refer to a component by different names. This document does not intend to distinguish between components that differ in name but not differ in function. In the following discussion and in the claims, the terms "include", "including", "comprise", and "comprising" are used in an open-ended fashion, and thus should be interpreted to mean "including, but not limited to ..." The terms "couple" and "coupled" are intended to mean either an indirect or a direct electrical connection. Thus, if a first device couples to a second device, that connection may be through a direct electrical connection, or through an indirect electrical connection via other devices and connections.

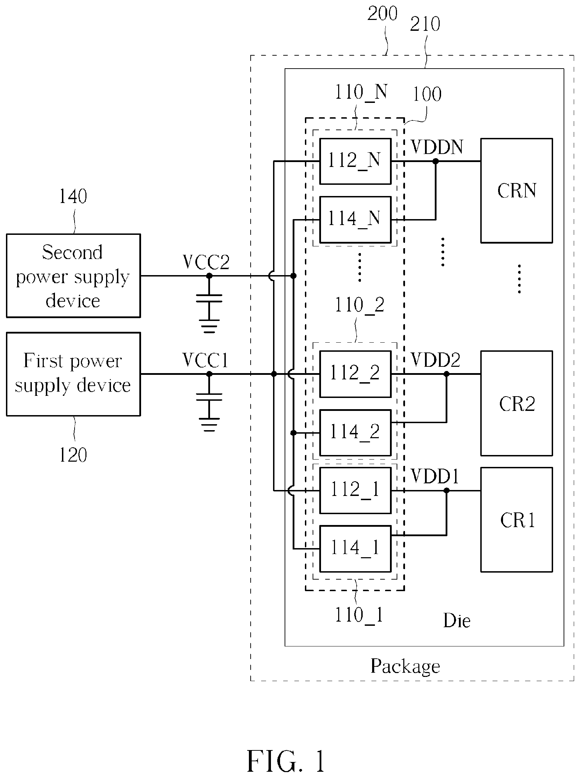

Referring first to FIG. 1, a schematic diagram is shown of a power delivery system in accordance with an embodiment of the present invention. As shown, a power delivery system 100 provides a plurality of core voltages VDD1-VDDN to a plurality of cores CR1-CRN of a multi-core processor chip 200. The power delivery system 100 comprises a plurality of power delivery devices 110_1-110_N, each coupled to one of cores CR1-CRN of the multi-core processor 200, and arranged to supply power to a corresponding core, respectively. Each of the power delivery devices 110_1-110_N comprises at a first power delivery unit (i.e., 112_1-112_N) and a second power delivery units (i.e., 114_1-114_N). However, according to various embodiments of the present invention, there may be some power delivery devices (not shown) having different architecture. For example, they may comprise the first power delivery unit or the second power delivery unit only.

The first power delivery units 112_1-112_N are further coupled to a first power supply device 120, which provides a first supply voltage VCC1 to the first power delivery units 112_1-112_N. The second power delivery units 114_1-114_N are further coupled to a second power supply device 140, which provides a second supply voltage VCC2 to the second power delivery units 114_1-114_N. The first power delivery units 112_1-112_N are operable to convert the first supply voltage VCC1 to the core voltages VDD1-VDDN respectively required by cores CR1-CRN and regulates levels of the core voltages VDD1-VDDN. In general, power required by the cores CR1-CRN are mostly supplied by the first power supply device 120 and delivered by the first power delivery units 112_1-112_N.

The second power delivery units 114_1-114_N are operable to convert the second supply voltage VCC2 to a boost current, respectively, in response to a suddenly large current demand of the cores CR1-CRN. When the boost current is supplied to a core, the level of the core voltage can be maintained/pull up, thereby avoiding the voltage droop effect and the degradation of the performance of the core. The second power delivery units 114_1-114_N are usually de-activated, and activated only when necessary. For example, if it is found that the level of the core voltage VDD1 suddenly drops, the corresponding second power delivery unit 114_1 will be activated to provide a boost current to the core CR1. This help the first power delivery unit 112_1 in maintaining the level of the core voltage VDD1 required by the core CR1.

As the second power delivery units 114_1-114_N may need to provide a large boost current when necessary. The supply voltage VCC2 supplied to the second power delivery units 114_1-114_N should be high enough. On the other hand, to guarantee an overall power efficiency of the power delivery system 100, the first supply voltage VDD1 provided by the first power supply device 120 should be as low as possible, and only needs to provide sufficient power to allow the first power delivery units 112_1-112_N to maintain the level of the core voltages VDD1-VDDN in general condition. In view of this, the first supply voltage VCC1 may be lower than the second supply voltage VCC2.

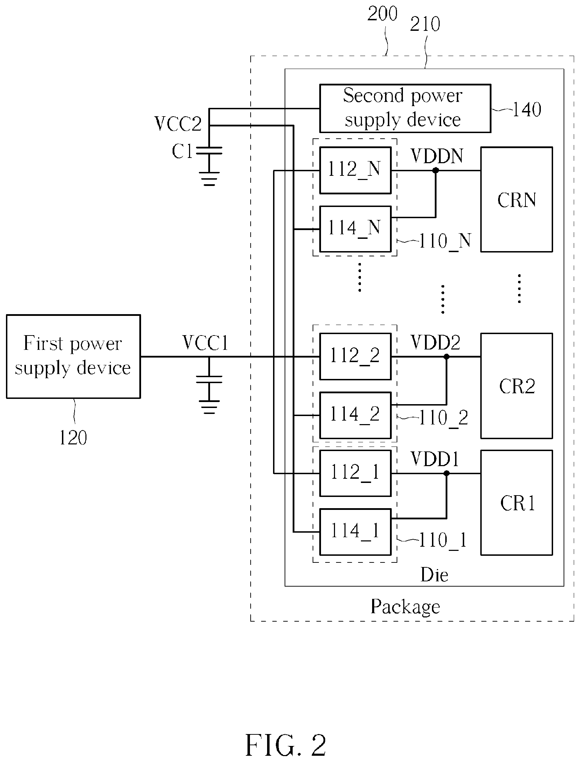

As illustrated by FIG. 1, the first power supply device 120 and the second power supply device 140 could be both disposed outside the multi-core processor chip 200, and preferably are implemented with buck regulators (for better power efficiency). However, in another embodiment as illustrated by FIG. 2, the first power supply device 120 could be disposed outside the multi-core processor chip 200, while the second power supply device 140 could be disposed inside the multi-core processor chip 200. In this embodiment, the second power supply device 140 could be a switched-capacitor boost converter on a die 210 where the cores CR1-CRN of the multi-core processor 200 are disposed. In the embodiment, the second supply voltage VCC2 might be provided with an output capacitor C1 outside the die 210.

Please note that, according to various embodiments of the present invention, there may be some cores (not shown) of the multi-core processing chip 200 that are directly powered by the first power supply device 120 and/or the second power supply device 140 without the power delivery devices 110_1-110_N.

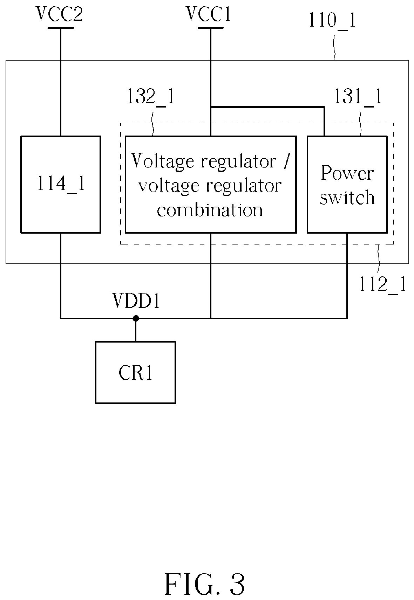

FIG. 3 illustrates a detailed schematic diagram of one of the power delivery device according to one embodiment of the present invention. Please note that, illustrated architecture is not limitations and could be further applied in every one of the power delivery device. In FIG. 3, the power delivery device 110_1 provides the core voltage VDD1 to the core CR1 of the multi-core processor chip 200. The first power delivery unit 112_1 may comprise either a power switch 131_1 or a voltage regulator/a voltage regulator combination 132_1. Alternatively, the first power delivery unit 112_1 may comprise both of the power switch 131_1 and the voltage regulator/the voltage regulator combination 132_1. Typically, the power delivery device 110_1 utilizes the power switch 131_1 and the voltage regulator/the voltage regulator combination 132_2 to provide the core voltage VDD1 for the core CR1. However, if the current demand of the core CR1 significantly ramps up, thereby causing the core voltage VDD1 significantly drops, the second power delivery unit 114_1 will be activated to remedy the current demand of the core CR1, facilitating regulating the core voltage VDD1 at the level desired by the core CR1.

The component 132_1 could be a single voltage regulator or a combination of multiple voltage regulators (i.e., the voltage regulator combination). In a preferred embodiment, the voltage regulator 132_1 is a low-dropout regulator (LDO), a switched-capacitor voltage regulator (SCVR) or a switched-mode power supply (SMPS) . In a preferred embodiment, the voltage regulator combination 132_1 comprises at least of a LDO, a SCVR or a SMPS.

According to one embodiment, the second power delivery unit 114_1 could be a voltage regulator or a combination of multiple voltage regulators. Preferably, the voltage regulator of the second delivery unit 114_1 may a low-dropout regulator (LDO), a switched-capacitor voltage regulator (SCVR) or a switched-mode power supply (SMPS), or the combination of multiple voltage regulators of second delivery unit 114_1 may comprise at least of a LDO, a SCVR or a SMPS. According to another embodiment, the second delivery unit 114_1 may comprise a combination of switches or current sources and comparators.

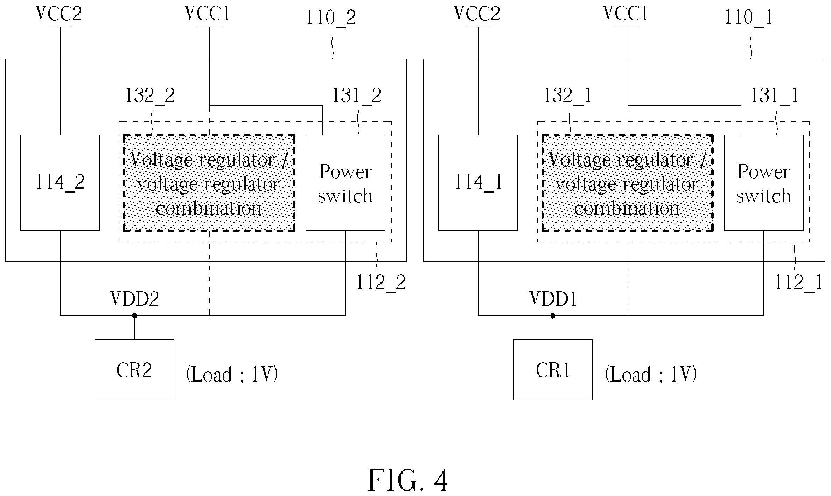

FIGS. 4-6 illustrate how the power delivery system operates to supply power to the core CR1 and the core CR2 in different load states according to one embodiment of the present invention. In condition (a) illustrated by FIG. 4, suppose that the core CR1 and CR2 are both in a heavy load state, and the desired levels of core voltages VDD1 and VDD2 are identically high (e.g. 1.0v), the power switches 131_1 and 131_2 will be conductive to provide the first supply voltage VCC1 to the core CR1 and CR2. The first power supply device 120 could directly output the supply voltage VCC1 that is substantially equal to 1.0V for the cores CR1 and CR2. Further, the second delivery unit 114_1 and the second delivery unit 114_2 will be activated if the current demand suddenly ramps up. As the desired level of the core CR1 and CR2 are identically high, there is no need for independently adjusting the core voltages VDD1 and VDD2. Hence, the voltage regulator/the voltage regulator combination 132_1 as well as the voltage regulator/the voltage regulator combination 132_2 will be not activated or bypassed because they may have lower efficiency than the first power supply device 120.

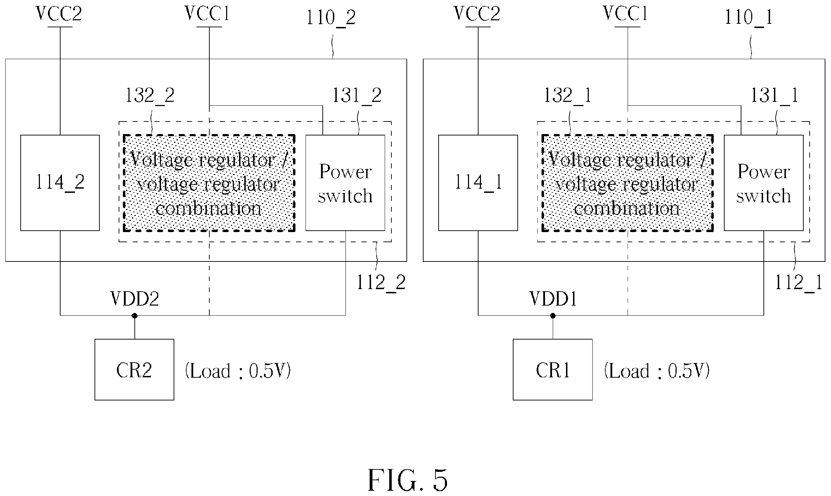

In condition (b) illustrated by FIG. 5, suppose that the core CR1 and CR2 are both in a light load state, and the desired levels of core voltages VDD1 and VDD2 are identically low (e.g. 0.5V), the power switches 131_1 and 131_2 will be conductive to provide the first supply voltage VCC1 to the core CR1 and CR2. The first power supply device 120 directly outputs the supply voltage VCC1 that is substantially equal to 0.5V for each core. Further, the second delivery unit 114_1 and the second delivery unit 114_2 will be activated if the current demand suddenly ramps up. As the desired level of the core CR1 and CR2 are identically low, there is no need for independently adjusting the core voltages VDD1 and VDD2. Hence, the voltage regulator/the voltage regulator combination 132_1 as well as the voltage regulator/the voltage regulator combination 132_2 will be not activated bypassed.

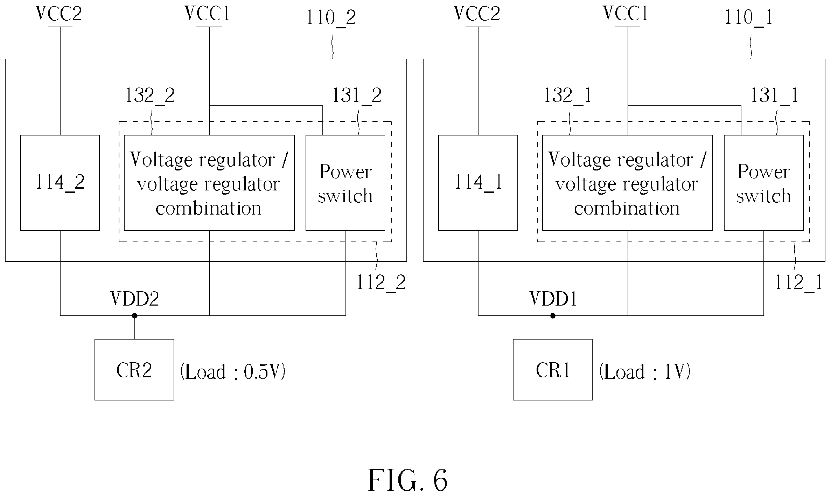

In condition (c) illustrated by FIG. 6, suppose that the core CR1 is in a heavy load state while the core CR2 is in a light load state, and the desired level of core voltages VDD1 and VDD2 are different (e.g. 1.0V and 0.5V), at least one of the voltage regulator /the voltage regulator combination 132_1 and the voltage regulator /the voltage regulator combination 132_2 cannot be bypassed since this is impossible for the first power supply device 120 to simultaneously provide the core voltages VDD1 and VDD2 at different levels. In this embodiment, the power switches 131_1 and 131_2 can be conductive or not. Still, the second delivery unit 114_1 and the second delivery unit 114_2 will be activated if the current demand suddenly ramps up. The power switches 131_1 and 132_2 are supposedly to be conductive or activated.

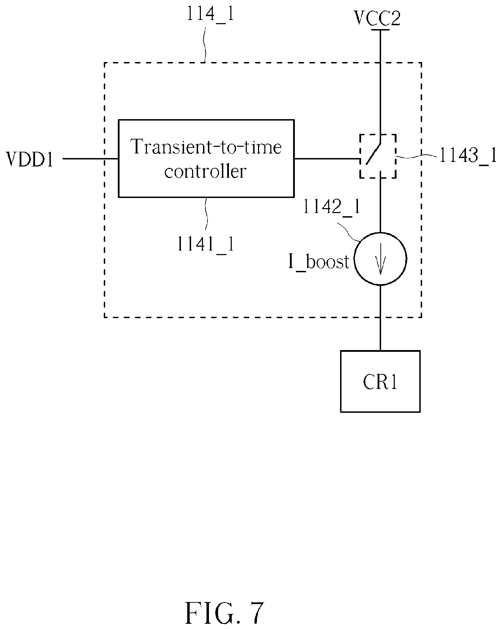

FIG. 7 illustrates operation of one of the second power delivery unit 114_1 according to one embodiment of the present invention. Pease note that similar circuitry may exist in other second power delivery unit according to various embodiments of the present invention. The second power delivery unit 114_1 comprises a transient-to-time controller 1141_1, a current source 1142_1, and a switch 1143_1. The transient-to-time controller 1141_1 is intended to monitor the level of the core voltage VDD1 of the core CR1 and determine whether and how long in time to activate the second power delivery unit 114_1 to supply a boost current I_boost. The transient-to-time controller may control the switch 1143_1 to be conductive, allowing the current source 1143_1 to provide the boost current I_boost to the core CR1.

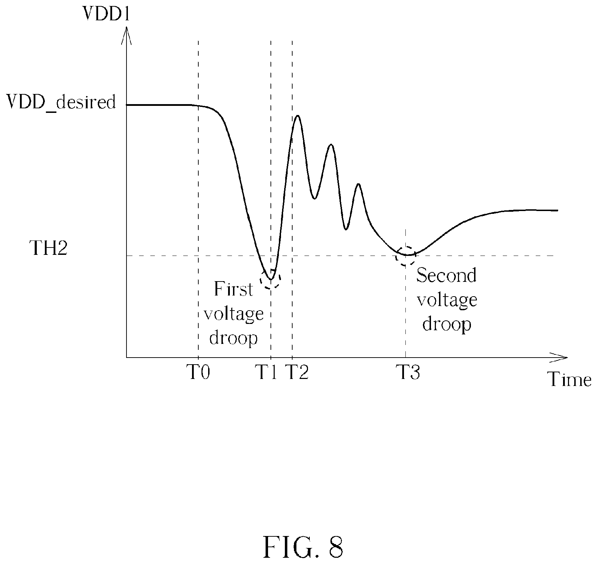

FIG. 8 illustrates a waveform of the core voltage for exemplarily explaining how the transient-to-time controller operates. As illustrated, a desired level of the core voltage VDD1 required by the core CR1 is VDD_desired. At time T0, the core CR1 draws a large current, thereby leads to a first voltage droop at time T1. From time T0 to T1, the transient-to-time controller 1141_1 may detect that a rate of level change of the core voltage VDD1 exceeds a threshold TH1. Therefore, the transient-to-time controller 1141_1 determines to control the second power deliver unit 114_1 to provide the boost current I_boost to the core CR1, thereby to pull up the level of the core voltage VDD1 and alleviate the voltage droop effect. As mentioned above, the second power deliver unit 114_1 may have lower power efficiency, and therefore the transient-to-time controller 1141_1 may control the second power deliver unit 114_1 to provide the boost current I_boost only in a short period. Furthermore, the transient-to-time controller 1141_1 may determine whether to provide the boost current I_boost according to a level threshold TH2. For example, as the level of the core voltage VDD1 is lower than the voltage level threshold TH2, the transient-to-time controller 1141_1 determines to control the second delivery unit 114_1 to provide the boost current I_boost. However, as the second droop of the core voltage VDD1 at time T3 is not lower than the voltage level threshold TH2 (even if the rate of level change is still high), the transient-to-time controller 1141_1 may not control the second delivery unit 114_1 to provide the boost current I_boost. Under such condition, the level of core voltage VDD1 is sustained only by the first power supply device 120 and the first power delivery device 112_1, which provides the higher supply voltage VCC1. Based on various thresholds and the activation period, there are wide opportunities for balancing the overall power efficiency of the second power delivery units 114_1-114_N and the overall performance of the multi-core processor chip 200.

Reference in the specification to "one embodiment" or "an embodiment" means that a particular feature, structure, or characteristic described in connection with the embodiment is included in at least an implementation. The appearances of the phrase "in one embodiment" in various places in the specification are not necessarily all referring to the same embodiment. Thus, although embodiments have been described in language specific to structural features and/or methodological acts, it is to be understood that claimed subject matter may not be limited to the specific features or acts described. Rather, the specific features and acts are disclosed as sample forms of implementing the claimed subject matter.

In conclusion, the first power deliver units of the power delivery system allows the levels of the core voltages can be independently adjusted, thereby to guarantee the overall power efficiency. The second power deliver units of the power delivery system facilitating maintaining/regulating levels of the core voltages when the levels severely drops due to the sudden large current demand. Therefore, the power delivery system effectively balances the performance and the power consumption of the multi-core processor chip.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A power delivery system (100) for a multi-core processor chip (200), **characterized by**:
a plurality of first power delivery units (112_1-112_N), each coupled to a first power supply device (120) and arranged to supply power from the first power supply device (120) to a core (CR_1- CR_N) of the multi-core processor chip (200); and
a plurality of second power delivery units (114_1-114_N), each coupled to a second power supply device (140) and arranged to selectively supply power from the second power supply (140) to a core (CR_1- CR_N) of the multi-core processor chip (200) according to a level of a core voltage (VDD1-VDDN) required by the core (CR_1-CR_N).

2. The power delivery system (100) of claim 1, **characterized in that** a first supply voltage (VCC1) provided by the first power supply device (120) to the first power delivery units (112_1-112_N) is lower than a second supply voltage (VCC2) provided by the second power supply device (140) to the second power delivery units (114_1-114_N).

3. The power delivery system (100) of claim 1, **characterized in that** at least one of the first power deliver units (112_1-112_N) is a voltage regulator (132_1) or a combination of multiple voltage regulators (132_1).

4. The power delivery system (100) of claim 3, **characterized in that** the voltage regulator (132_1) is a low-dropout regulator (LDO), a switched-capacitor voltage regulator (SCVR) or a switched-mode power supply (SMPS), or the combination of multiple voltage regulators (132_1) comprises at least of a LDO, a SCVR or a SMPS.

5. The power delivery system (100) of claim 1, **characterized in that** at least one of the first power deliver units (112_1-112_N) is power switch (131_1).

6. The power delivery system (100) of claim 1, **characterized in that** at least one of the first power deliver units (112_1-112_N) comprises a power switch (131_1) and a voltage regulator (132_1) or a combination of multiple voltage regulators (132_1) that are connected in parallel.

7. The power delivery system (100) of claim 6, **characterized in that** the voltage regulator (132_1) or the combination of multiple voltage regulators (132_1) of the at least one first power deliver unit (112_1-112_N) is bypassed when levels of core voltages (VDD1-VDDN) required by multiple ones of the cores (CR_1-CR_N) are substantially identical.

8. The power delivery system (100) of claim 1, **characterized in that** at least one of the second power deliver units (114_1-114_N) comprises a voltage regulator (132_1) or a combination of multiple voltage regulators (132_1).

9. The power delivery system (100) of claim 8, **characterized in that** the voltage regulator (132_1) is a low-dropout regulator (LDO), a switched-capacitor voltage regulator (SCVR) or a switched-mode power supply (SMPS), or the combination of multiple voltage regulators (132_1) comprises at least of a LDO, a SCVR or a SMPS.

10. The power delivery system (100) of claim 1, **characterized in that** at least one of the second power deliver units (114_1-114_N) comprises a combination of switches or current sources and comparators.

11. The power delivery system (100) of claim 1, **characterized in that** at lease one of the second power supply units (114_1-114_N) comprises: a transient-to-time controller (1141_1) that is arranged to determine whether and how long in time to supply power to a core (CR1-CRN) of the multi-core processor chip (200) and accordingly control the at least one of the second power supply unit (114_1-114_N) to pull up a level of a core voltage (VDD1-VDDN) required by the core (CR1-CRN)by providing a boost current (I_boost) to the core (CR1-CRN).

12. The power delivery system (100) of claim 11, **characterized in that** the transient-to-time controller (1141_1) determines whether to supply the power to the core (CR1-CRN) of the multi-core processor chip (200) according to at least one of a change rate of the level of the core voltage (VDD1-VDDN) and a level threshold.

13. The power delivery system (100) of claim 1, **characterized in that** the first and the second power supply devices (120, 140) are buck regulators that are disposed outside the multi-core processor chip (200).

14. The power delivery system (100) of claim 1, **characterized in that** first power supply device (120) is a buck regulator that is disposed outside the multi-core processor chip (200), and the second power supply unit (140) is a switching-capacitor regulator that is disposed on a die of the multi-core processor chip (200).

15. A multi-core processor chip (200), **characterized by**:
a plurality of cores (CR1-CRN); and
a power delivery system (100), comprising:
a plurality of first power delivery units (112_1-112_N), each coupled to a first power supply device (120) and arranged to supply power from the first power supply device (120) to a core (CR1-CRN) of the multi-core processor chip (200); and
a plurality of second power delivery units (114_1-114_N), each coupled to a second power supply device (140) and arranged to selectively supply power from the second power supply device (140) to a core (CR1-CRN) of the multi-core processor chip (200) according to a level of a core voltage (VDD1-VDDN) required by the core (CR1-CRN).
